Europäisches Patentamt

European Patent Office

Office européen des brevets

(11) Publication number: **0 418 758 A2**

# EUROPEAN PATENT APPLICATION

(21) Application number: **90117763.4**

(51) Int. Cl.5: **G02F 1/1347**

(22) Date of filing: **14.09.90**

(30) Priority: **19.09.89 JP 242586/89**

(43) Date of publication of application:
**27.03.91 Bulletin 91/13**

(84) Designated Contracting States:
**DE FR GB**

(71) Applicant: **SEMICONDUCTOR ENERGY LABORATORY CO., LTD.**
**398 Hase**
**Atsugi-shi Kanagawa-ken, 243(JP)**

(72) Inventor: **Fukui, Takashi**
**1394-10, Hase**
**Atsugi-shi, Kanagwa-ken, 243(JP)**
Inventor: **Watanabe, Toshio**
**Coop Kawaguchi, 202, 358-1, Tsumada**
**Atsugi-shi, Kanagwa-ken, 243(JP)**

(74) Representative: **Patentanwälte Grünecker, Kinkeldey, Stockmair & Partner**
**Maximilianstrasse 58**
**W-8000 München 22(DE)**

(54) **Liquid crystal electro-optical device.**

(57) An improved liquid crystal electro-optical device is disclosed. The liquid crystal electro-optical device comprises two panels, each of which comprises a pair of substrates and nematic liquid crystals disposed therebetween in a helical structure. Instead of using four substrates, a liquid crystal electro-optical device comprising three substrates forming two liquid crystal layers therebetween is also disclosed. Further a liquid crystal electro-optical device comprising a pair of substrates and a pair of films is disclosed.

FIG.2

EP 0 418 758 A2

## LIQUID CRYSTAL ELECTRO-OPTICAL DEVICE

### BACKGROUND OF THE INVENTION

#### Field of the invention

The present invention relates to an improved liquid crystal electro-optical device.

#### Description of the Prior Art

Liquid crystal electro-optical devices of twisted nematic type (TN type) have been used for watches and electric calculators for years. This liquid crystal electro-optical device of TN type has a helical structure wherein the uppermost and lowermost nematic liquid crystals between a pair of substrates are oriented in different directions by an angle of 90°. In this liquid crystal electro-optical device of TN type, the threshold value of applied voltage against switching of liquid crystals is not clear, so that in the case of using such a device as a large area display or the like, the contrast becomes very small.

On the other hand, liquid crystal electro-optical devices of super twisted nematic type (STN type) have been used as comparatively large sized displays such as displays of word processors. This liquid crystal electro-optical device of STN type has a helical structure wherein the uppermost and lowermost nematic liquid crystals between a pair of substrates are oriented in different directions by an angle of 180° to 270°. Although this liquid crystal electro-optical device of STN type can be used as a comparatively large sized display, it is impossible to display in black and white due to an anisotropy of refractive index of liquid crystals and up to now displays called yellow mode and blue mode are used. But such a yellow display and blue display have a drawback that users feel tiredness in their eyes while watching such displays.

In order to make the black - white display possible, recently is proposed a two-panel liquid crystal electro-optical device of STN type. This two-panel liquid crystal electro-optical device of STN type consists of a panel for driving liquid crystals, which has the same structure as that of conventional liquid crystal electro-optical device of STN type, and a panel for optical compensation. The light emitted from a light source passes through a polarizing plate to become the linearly polarized light and then passes through the panel for driving liquid crystals to become the elliptically polarized light and then passes through the panel for optical compensation to become again an almost linearly polarized light, whereby it becomes possible to display in black and white.

This panel for optical compensation is very similar to the panel for driving liquid crystals, but in the panel for optical compensation are not provided any electrodes, unlike the panel for driving liquid crystals. Further, the liquid crystals in the panel for optical compensation are twisted in the opposite direction to the case of the panel for driving liquid crystals.

Here is described one example of a conventional two-panel liquid crystal electro-optical device of STN type (liquid crystal electro-optical device of transmission type). The device is composed of an light source, a panel for driving liquid crystals having a pair of substrates, and a panel for optical compensation having a pair of substrates, and they are placed in this order in the device (a liquid crystal electro-optical device having a light source is called liquid crystal electro-optical device of transmission type). Orientation directions of two substrate surfaces placed in the center of this liquid crystal electro-optical device are crossed at an angle of 90°. The orientation direction means a direction in which an orientation layer or film of a liquid crystal electro-optical device is patterned. Rubbing direction is an example of the orientation direction. And a direction in which parallel fine strips are formed on a substrate of a liquid crystal electro-optical device is also an example of the orientation direction. Users see display on the side of the panel for optical compensation. Such a liquid crystal electro-optical device can display in black and white with highest contrast.

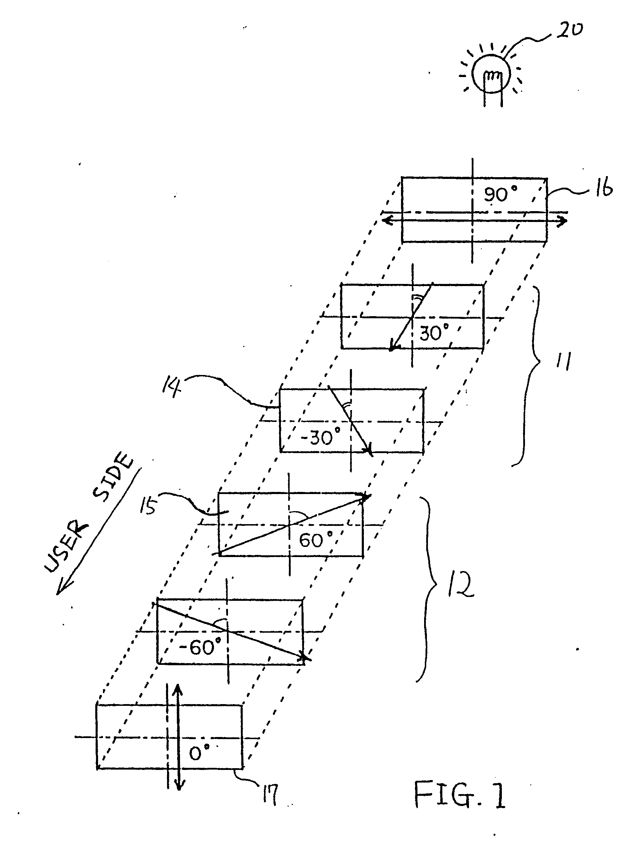

In Fig.1 is illustrated the orientation direction of each substrate in said two-panel STN liquid crystal electro-optical device of transmission type by the use of arrow. 16 and 17 designate polarizing plates. The orientation directions of substrates 14 and 15 form an angle of 90°.

The two-panel liquid crystal electro-optical device comprising the substrates 14 and 15 whose orientation directions are crossed at an angle of 90° has high contrast, however, both of black display and white display are not light. The dark displays tire users' eyes easily.

A liquid crystal electro-optical device which has films with anisotropy of refractive index instead of the conventional panel for optical compensation has been produced. However, since the films transmit no little light during displaying in black, high contrast can not be obtained.

### SUMMARY OF THE INVENTION

It is an object of the present invention to provide a liquid crystal electro-optical device which can exhibit light white display.

It is another object of the present invention to provide a liquid crystal electro-optical device having high contrast.

## BRIEF DESCRIPTION OF THE DRAWINGS

Fig.1 is a view showing orientation directions and directions of absorption axes of polarizing plates in a conventional two-panel liquid crystal electro-optical device of STN type.

Fig.2 is a view showing orientation directions and directions of absorption axes of polarizing plates in a liquid crystal electro-optical device according to the present invention.

Fig.3 is another view showing orientation directions and directions of absorption axes of polarizing plates in a liquid crystal electro-optical device according to the present invention.

Fig.4 shows a cross sectional view of a liquid crystal electro-optical device according to the present invention.

Fig.5 is a view showing orientation directions and directions of absorption axes of polarizing plates in a liquid crystal electro-optical device according to the present invention.

Fig.6 shows a cross sectional view of a liquid crystal electro-optical device according to the present invention.

Fig.7 is a view showing orientation directions and directions of absorption axes of polarizing plates in a liquid crystal electro-optical device according to the present invention.

Fig.8 shows a cross sectional view of a liquid crystal electro-optical device according to the present invention.

Fig.9 is a view showing drawn directions of films used in an embodiment of the present invention.

Fig.10 is a graphical view showing relation between the angle at which the drawn directions of the films are crossed and the contrast.

Fig.11 shows a cross sectional view of a liquid crystal electro-optical device according to the present invention.

Fig.12 is another view showing drawn directions of films used in an embodiment of the present invention.

Fig.13 is another graphical view showing relation between the angle at which the drawn directions of the films are crossed and the contrast.

Fig.14 shows a cross sectional view of a liquid crystal electro-optical device according to the present invention.

## DETAILED DESCRIPTION OF THE PREFERRED

## EMBODIMENTS

A two-panel liquid crystal electro-optical device of STN type according to embodiments of the present invention comprises a panel for driving liquid crystals in which nematic liquid crystals having positive dielectric anisotropy including optically active substances therein form a helical structure between a pair of substrates so that the uppermost and lowermost nematic liquid crystals are oriented in different direction by an angle of $180°$ to $270°$, and a panel for optical compensation in which nematic liquid crystals having positive dielectric anisotropy including optically active substances therein form a helical structure between a pair of substrates so that the uppermost and lowermost nematic liquid crystals are oriented in different direction by an angle of $-180°$ to $-270°$. In order to improve lightness of white display, two substrates located in the center of the above liquid crystal electro-optical device are arranged so that orientation directions of orientation surfaces on the two substrates are crossed at an angle of $80°$ to $85°$ or $95°$ to $100°$. In such a liquid crystal electro-optical device black and white display can be done without degrading contrast, and the lightness during white display is extremely improved.

A liquid crystal electro-optical device having the same structure as the above liquid crystal electro-optical device except that one substrate is used instead of the two substrates disposed in the center of the device, i.e. comprising three substrates in total, does not cost much and is light in weight and further has a good transparency. Concerning said device comprising three substrates therein, liquid crystals are interposed between the both sides of the substrate disposed in the center and the other two substrates, so that two layers of liquid crystals are formed. One of the liquid crystal layer has a helical structure wherein the uppermost and the lowermost nematic liquid crystals in the layer are oriented in different directions by an angle of $180°$ to $270°$. The other liquid crystal layer has a helical structure that the uppermost and the lowermost nematic liquid crystals in the layer are oriented in different directions by an angle of $-180°$ to $-270°$. And the orientation directions of the both orientation surfaces on the substrate disposed in the center are crossed at an angle of $80°$ to $85°$ or $95°$ to $100°$. In the liquid crystal electro-optical device comprising three substrates, black and white display can be done without degrading contrast, and the lightness during white display is extremely improved.

When the angle is $80°$ or less or $100°$ or more, it becomes impossible to display in black and white and the picture is colored unwillingly. Further when the angle is between $85°$ and $95°$,

the picture is so dark that users feel difficulty to see the display.

A liquid crystal electro-optical device according to other embodiments of the present invention comprises a liquid crystal panel and two drawn films having anisotropy of refractive index wherein nematic liquid crystals having positive dielectric anisotropy including optically active substances therein form a helical structure between a pair of substrates of the liquid crystal panel so that the uppermost and lowermost nematic liquid crystals are oriented in different directions by an angle of 180° to 270°. In order to obtain high contrast, the liquid crystal electro-optical device is provided with the two drawn films so that directions in which the two films are drawn are crossed at an angle of 40° or less. In such a liquid crystal electro-optical device contrast is extremely high. Further because of using films, this liquid crystal electro-optical device is extremely light in weight.

(Embodiment No. 1)

In this embodiment is shown an example of a liquid crystal electro-optical device comprising a light source, a panel for driving liquid crystals, and a panel for optical compensation wherein they are arranged in this order.

On a first substrate made from soda glass is formed an ITO (indium tin oxide) thin film as transparent electrodes by means of DC sputtering method, and subsequently said ITO thin film is patterned into segment electrodes by means of well-known photolithography method.

Then on a second substrate made from soda glass are formed common electrodes made from an ITO thin film by means of the same methods as the preceding methods.

Then, by making use of an offset press, polyamic acid (polyamide carboxylic acid) is applied on the first and the second substrates and the substrates are heated at a temperature of 300 degrees Centigrade for 3 hours to form polyimide thin films thereon.

The polyimide thin films on the both substrates are rubbed by the use of cotton cloth. The rubbing treatment is done to cross the rubbing directions of the first substrate and the second substrate at an angle of 240°.

Then on one substrate are scattered ball-like fine particles made of $SiO_2$ having the diameter of 7. 5μm (which are called spacers), and on the other substrate is screen-printed a sealing material consisting mainly of epoxy resin, and subsequently these substrates are stuck together.

After that, liquid crystals are injected by means of well-known vacuum injection method to produce a panel for driving liquid crystals. The liquid crystals comprise nematic liquid crystals and cholesteric liquid crystals. However, the center part of the panel swells by the injection, so that pressing is again carried out. Namely, in order to take the excessive liquid crystals out from the interior of the panel, pressure is added toward the inside. Then an injection port of the liquid crystals is sealed with ultraviolet ray curing agent and the panel for driving liquid crystals is completed.

Next is produced a panel for optical compensation.

On third and fourth substrates made from soda glass is applied polyamic acid by the use of an offset press. Said two substrates are heated at a temperature of 300 degrees Centigrade for 3 hours to form polyimide thin films thereon.

The polyimide thin films formed on the both substrates are rubbed by the use of cotton cloth. Rubbing directions of the third and the fourth substrates are crossed at an angle of 240°, in the opposite direction to the case of the panel for driving liquid crystals. And the third substrate is rubbed to cross the rubbing direction of the third substrate and the rubbing direction of the second substrate at an angle of 80°.

Then on one substrate are scattered ball-like fine particles made of $SiO_2$ having the diameter of 7. 5μm (which are called spacers), and on the other substrate is screen-printed a sealing material consisting mainly of epoxy resin, and subsequently the substrates are stuck together.

After that, liquid crystals are injected by means of well-known vacuum injection method to produce a panel for optical compensation. However, the center of the panel swells by the injection, so that pressing is again carried out. Namely, in order to take the excessive liquid crystals out from the interior of the panel, pressure is added toward the inside. Then an injection port of the liquid crystals is sealed with ultraviolet ray curing agent and the panel for optical compensation is completed.

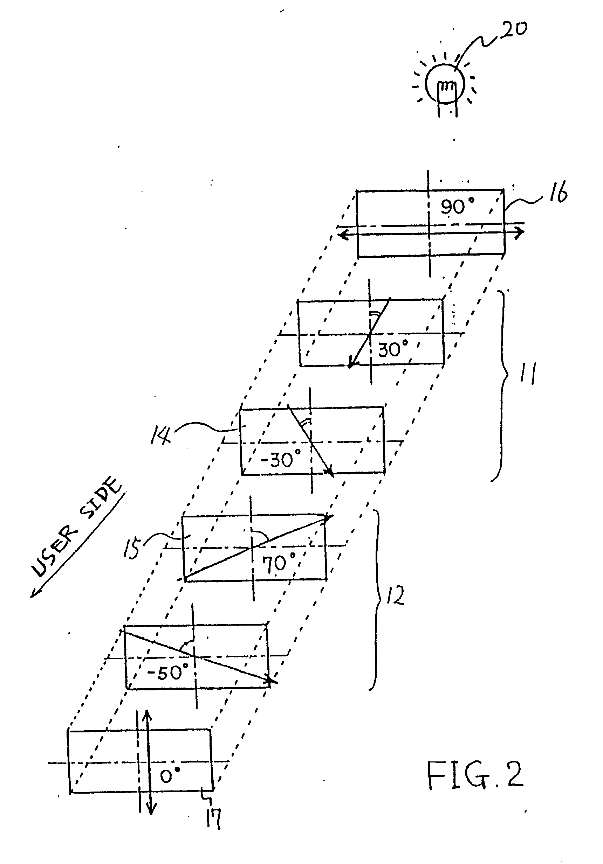

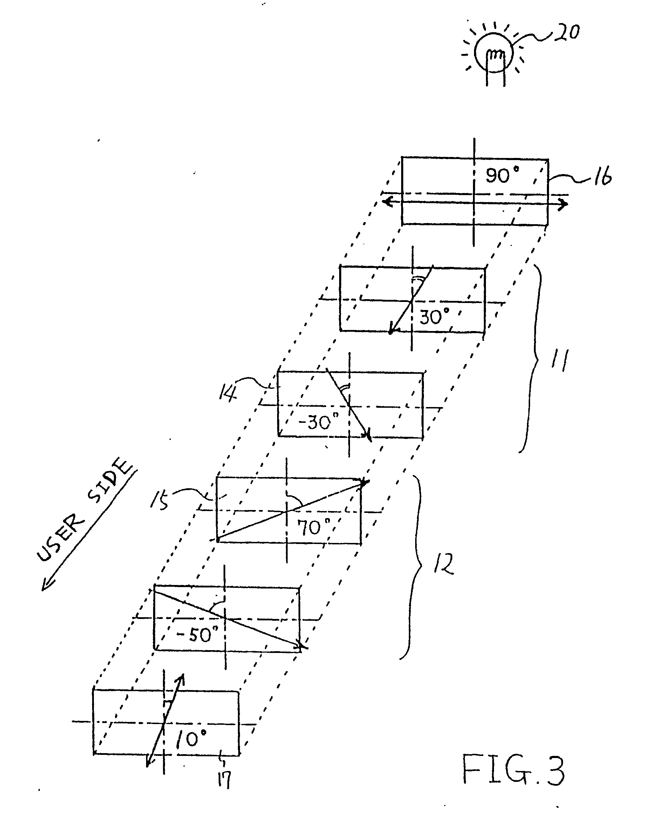

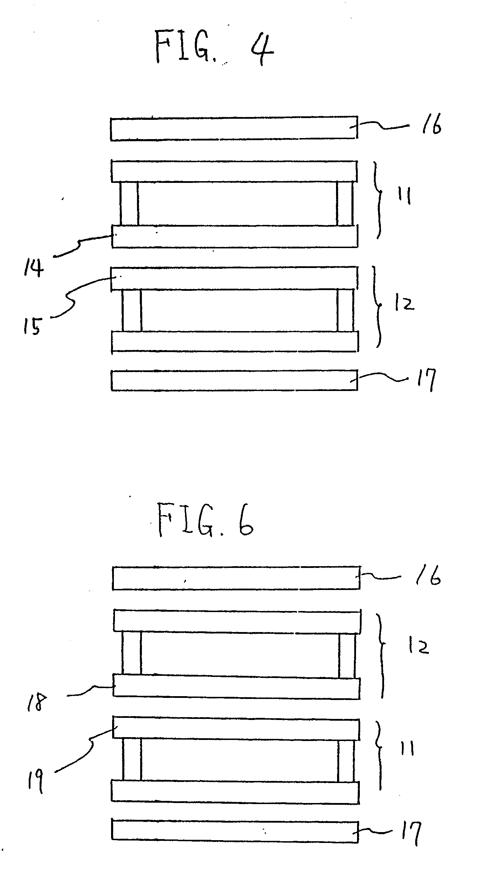

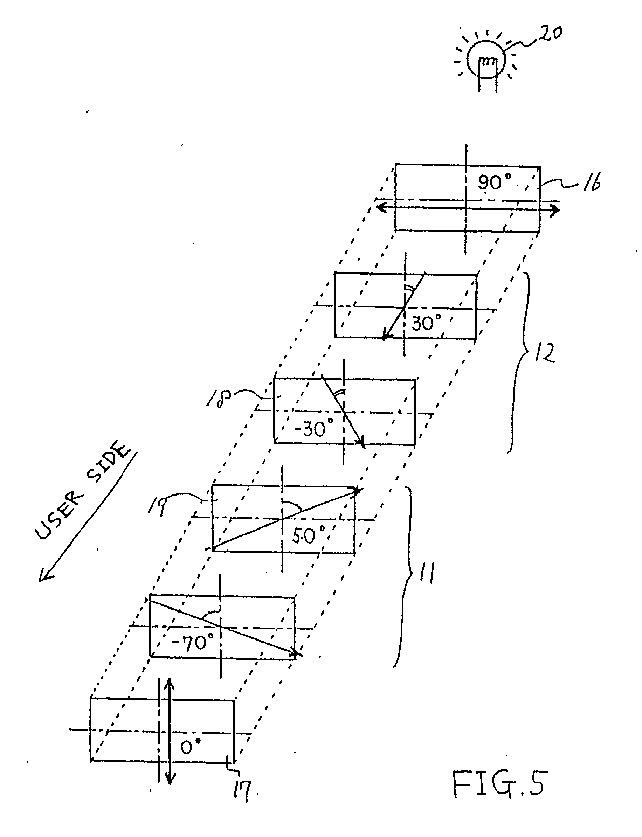

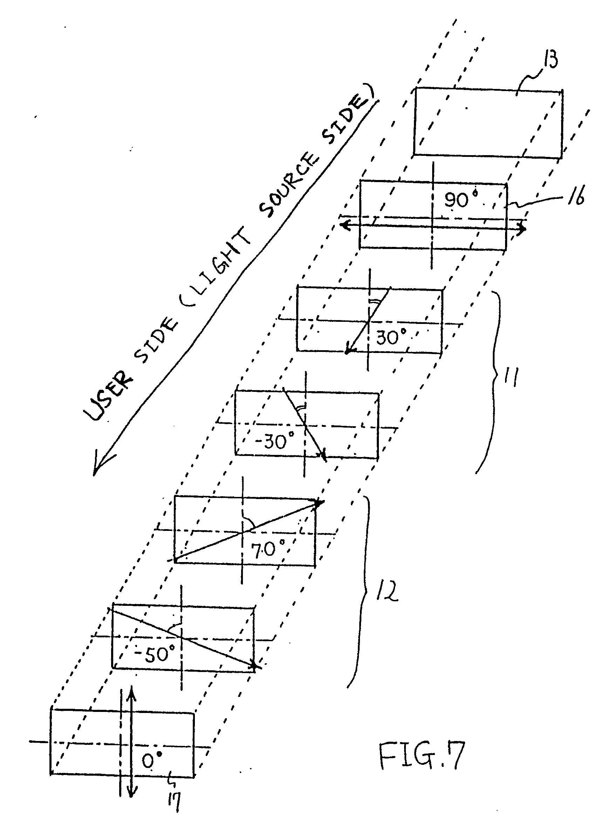

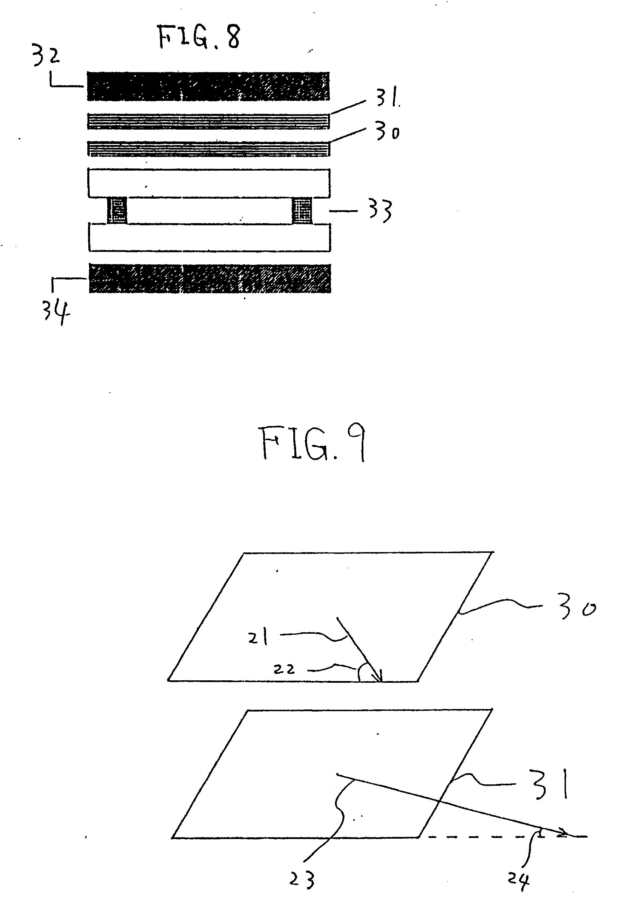

Then, polarizing plates 16 and 17, a light source 20, a panel for driving liquid crystals 11, and a panel for optical compensation 12 are disposed as shown in Fig.2 and Fig.4. In Fig.2 arrows illustrated on the polarizing plates show the directions of absorption axes thereof and arrows illustrated on the first, second, third, and fourth substrates show orientation directions. As apparent from Fig.2, a substrate 14 of users side in the panel for driving liquid crystals 14 and a substrate 15 in the panel for optical compensation are set to cross the orientation directions of the above substrates at an angle of 80°. By setting the substrates in the preceding way, light display can be obtained compared with that of the conventional device. Practically, a research concerning the comparison between the conventional two-panel STN device and the device described in this embodiment was carried out. As a result of the research, 98 in 100 persons answered that the device in this embodiment was lighter and easier to see than the conventional device. Thereby it is obvious that the present invention is superior. In this embodiment the absorption axes of the polarizing plates are crossed at right angles. When the polarizing plates are set with the direction of absorption axis of one polarizing plate shifted within an angle of 5° to 10° as shown in Fig.3, further light and accurate display in black and white can be obtained compared with the display of this embodiment. In Fig.3 arrows illustrated on the polarizing plates show the directions of absorption axes and arrows illustrated on the first, second, third, and fourth substrates show the orientation directions.

(Embodiment No.2)

In this embodiment is shown an example of a liquid crystal electro-optical device comprising a light source, a panel for optical compensation, and a panel for driving liquid crystals wherein they are arranged in this order.

On a first substrate made from soda glass is formed an ITO thin film as transparent electrodes by means of DC sputtering method. Subsequently said ITO thin film is patterned into segment electrodes by means of well-known photolithography method.

On a second substrate made from soda glass are formed common electrodes made from an ITO thin film by means of the same methods as the preceding methods.

Then on the first and the second substrates is applied polyamic acid by the use of an offset press and the substrates are heated at a temperature of 300 degrees Centigrade for 3 hours to form polyimide thin films.

The polyimide thin films formed on the both substrates are rubbed by the use of cotton cloth. The rubbing treatment is done to cross the rubbing directions of the first and the second substrates at an angle of 240°.

Then on one substrate are scattered ball-like fine particles made of SiO$_2$ having the diameter of 7.5μm (which are called spacers) and on the other substrate is screen-printed a sealing material consisting mainly of epoxy resin, and the substrates are stuck together.

After that, liquid crystals are injected by means of well-known vacuum injection method to produce a panel for driving liquid crystals. But the center of the panel swells by the injection, so that pressing is again carried out. Namely, in order to take the excessive liquid crystals out from the interior of the panel, pressure is added toward the inside. Then an injection port of liquid crystals is sealed with ultraviolet ray curing agent, and the panel for driving liquid crystals is completed.

Next, a panel for optical compensation is produced.

On third and fourth substrates is applied polyamic acid by the use of an offset press, and subsequently the substrates are heated at a temperature of 300 degrees Centigrade for 3 hours to form polyimide thin films thereon.

Then the polyimide thin films formed on the both substrates are rubbed by the use of cotton cloth. The rubbing treatment is done to cross the rubbing directions of the third and the fourth substrates at an angle of 240° in the opposite direction to the case of the panel for driving liquid crystals. Further the third substrate is rubbed to cross the rubbing direction of the third substrate and the rubbing direction of the second substrate at an angle of 100°.

On one substrate are scattered ball-like fine particles made of SiO$_2$ having the diameter of 7.5μm (which are called spacers) and on the other substrate is screen-printed a sealing material consisting mainly of epoxy resin, then the substrates are stuck together.

After that, liquid crystals are injected by means of well-known vacuum injection method to produce a panel for optical compensation. But the center of the panel swells by the injection, so that pressing is again carried out. Namely, in order to take the excessive liquid crystals out from the interior of the panel, pressure is added toward the inside. Then an injection port of liquid crystals is sealed with ultraviolet ray curing agent, and the panel for optical compensation is completed.

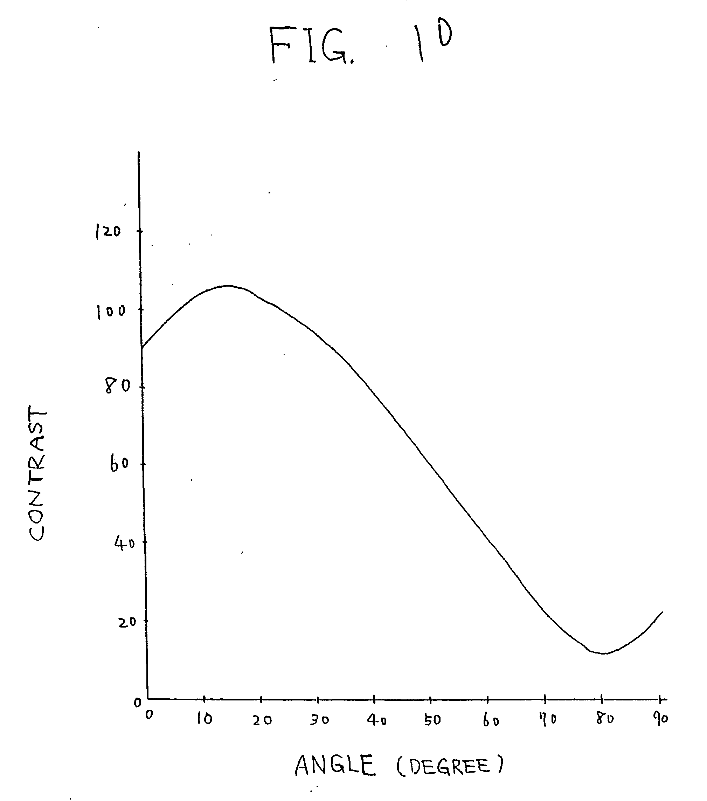

Then polarizing plates 16 and 17, a light source 20, a panel for driving liquid crystals 11, and a panel for optical compensation 12 are disposed as shown in Fig.5 and Fig.6. Thereby light display can be obtained. In Fig.5 arrows illustrated on the polarizing plates show the directions of absorption axes and arrows illustrated on the first, second, third, and fourth substrates show the orientation directions.

In this embodiment the panel for driving liquid crystals 11 is disposed on the users' side and the panel for optical compensation 12 on the light source side. Therefore in this case, the orientation direction on a substrate 18 of the panel for optical compensation and the orientation direction on a substrate 19 of the light source side in the panel for driving liquid crystals are crossed at an angle of 80° to 85° or at an angle of 95° to 100°.

(Embodiment No. 3)

In this embodiment is described a liquid crystal electro-optical device comprising a reflecting plate instead of a light source.

On a first substrate made from soda glass is formed an ITO thin film as transparent electrodes by means of DC sputtering method, and subsequently the ITO thin film is patterned into segment electrodes by means of well-known photolithography method.

On a second substrate made from soda glass are formed common electrodes made from an ITO thin film by means of the same methods as the preceding methods.

Then on the first and the second substrates is applied polyamic acid by the use of an offset press, and the substrates are heated at a temperature of 300 degrees Centigrade for 3 hours to form polyimide thin films thereon.

The polyimide thin films formed on the both substrates are rubbed by the use of cotton cloth. The rubbing treatment is done to cross the rubbing directions of the first and the second substrates at an angle of 240°.

On one substrate are scattered ball-like fine particles made of $SiO_2$ having the diameter of 7.5$\mu$m and on the other substrate is screen-printed a sealing material consisting mainly of epoxy resin, and then the substrates are stuck together.

After that, liquid crystals are injected by means of well-known vacuum injection method to produce a panel for driving liquid crystals. But the center of the panel swells by the injection, so that pressing is again carried out. Namely, in order to take the excessive liquid crystals out from the interior of the panel, pressure is added toward the inside. Then an injection port of liquid crystals is sealed with ultraviolet ray curing agent, and the panel for driving liquid crystals is completed.

Next, a panel for optical compensation is produced.

On third and fourth substrates made from soda glass is applied polyamic acid by the use of an offset press, and the substrates are heated at a temperature of 300 degrees Centigrade for 3 hours to form polyimide thin films thereon.

The polyimide thin films formed on the both substrates are rubbed by the use of cotton cloth. The rubbing treatment is done to cross the rubbing directions of the third and the fourth substrates at an angle of 240° in the opposite direction to the case of the panel for driving liquid crystals. Further the third substrate is rubbed to cross the rubbing direction of the third substrate and the rubbing direction of the second substrate at an angle of 80°.

On one substrate are scattered ball-like fine

particles made of $SiO_2$ having the diameter of 7.5$\mu$m (which are called spacers) and on the other substrate is screen-printed a sealing material consisting mainly of epoxy resin, and then the substrates are stuck together.

After that, liquid crystals are injected by means of well-known vacuum injection method to produce a panel for optical compensation. But the center of the panel swells by the injection, so that pressing is again carried out. Namely, in order to take the excessive liquid crystals out from the interior of the panel, pressure is added toward the inside. Then an injection port of the liquid crystals is sealed with ultraviolet ray curing agent, and the panel for optical compensation is completed.

Then, polarizing plates 16 and 17, a reflecting plate 13, a panel for driving liquid crystals 11, and a panel for optical compensation 12 are disposed as shown in Fig. 7, and thereby light display can be obtained. The cross sectional view of the liquid crystal electro-optical device of this embodiment is the same as that illustrated in Fig.4 except that the reflecting plate 13 is not illustrated therein. The reflecting plate 13 is provided on the polarizing plate 16.

In Fig.7 arrows illustrated on the polarizing plates show the directions of absorption axes and arrows illustrated on the substrates show the orientation directions.

(Embodiment No. 4)

In this embodiment is described a liquid crystal electro-optical device comprising two films having anisotropy of refractive index wherein the two films are provided on one side of a liquid crystal panel.

On a first substrate made from soda glass is formed an ITO thin film as transparent electrodes by means of DC sputtering method, and subsequently the ITO thin film is patterned into segment electrodes by means of well-known photolithography method.

On a second substrate made from soda glass are formed common electrodes made from an ITO thin film by means of the same methods as the preceding methods.

On the first and the second substrates is applied polyamic acid by the use of an offset press, and the substrates are heated at a temperature of 300 degrees Centigrade for 3 hours to form polyimide thin films thereon.

The polyimide thin films formed on the both substrates are rubbed by the use of cotton cloth. The rubbing treatment is done to cross the rubbing directions of the first and the second substrates at an angle of 240°.

On one substrate are scattered ball-like fine

particles made of $SiO_2$ having the diameter of 7.5$\mu$m (which are called spacers) and on the other substrate is screen-printed a sealing material consisting mainly of epoxy resin, then the substrates are stuck together.

After that, liquid crystals are injected by means of well-known vacuum injection method to produce a liquid crystal panel. But the center of the panel swells by the injection, so that pressing is again carried out. Namely, in order to take the excessive liquid crystals out from the interior of the panel, pressure is added toward the inside. Then an injection port of the liquid crystals is sealed with ultraviolet ray curing agent, and the liquid crystal panel is completed.

Two drawn polycarbonate films 30 and 31 having anisotropy of refractive index are previously stuck on one side of a polarizing plate 32 as shown in Fig. 8. Said polarizing plate with the two films is set in order that the two films are interposed between one surface of the liquid crystal panel 33 and the polarizing plate, and on the other surface of the panel is provided the other polarizing plate 34 only. Thus a liquid crystal electro-optical device is produced.

In Fig.9 are shown drawn directions of the first and the second films of this embodiment. 30 designates the first film and 31 designates the second film.

In Fig. 9, 21 shows a direction in which a first polycarbonate film is drawn and retardation $dn_o$-$dn_e$ of the first film is 305nm in this embodiment ($dn_o$ is an optical distance of ordinary ray and $dn_e$ is an optical distance of extraordinary ray). 23 shows a direction in which a second polycarbonate film is drawn, and retardation $dn_o$-$dn_e$ of the second film is 390nm in this embodiment. The first and the second films have anisotropy of refractive index. 22 shows an angle at which the drawn direction 21 of the first film and one side of the panel are crossed, and the angle is 55° in this embodiment. 24 shows an angle at which the drawn direction 23 of the second film and said one side of the panel are crossed, and the angle is 15° in this embodiment. Therefore, absolute value of the angle 22 minus the angle 24 is 40°. The films drawn in such directions described above are used as films 30 and 31 of this embodiment.

When first and second films are drawn, arrangement of atoms in the films are changed and the distance between the atoms in the drawn direction is made longer. Because of this, birefringence phenomenon occurs in the films. That the absolute value of the angle 22 minus the angle 24 is 40° means as follows: The first and second films which are shifted relatively at an angle of 40° to make the angle 22 minus the angle 24 zero make the same light undergo the same birefringence therein.

When measuring contrast of the liquid crystal electro-optical device described in this embodiment, contrast of 80, namely, extremely high contrast can be obtained.

As an experiment, the two films are provided on one side of the liquid crystal panel in order that absolute values of the angle 22 minus the angle 24 are 0°, 10°, 20°, 30°, 40°, 50°, 60°, 70°, 80°, and 90°. In Fig. 10 is shown a result of contrast of liquid crystal electro-optical device in each of the preceding conditions. Contrast in Fig. 10 shows that of one picture element. The numerical aperture in this embodiment is 82%. That is, 18% of an area of the liquid crystal panel is blocked by the ITO electrodes.

(Embodiment No. 5)

In this embodiment is described a liquid crystal electro- optical device comprising two films having anisotropy of refractive index wherein the two films are provided on both surfaces of a liquid crystal panel, respectively.

On a first substrate made from soda glass is formed an ITO thin film as transparent electrodes by means of DC sputtering method, and subsequently the ITO thin film is patterned into segment electrodes by means of well-known photolithography method.

On a second substrate made from soda glass are formed common electrodes made from an ITO thin film by means of the same methods as the preceding methods.

On the first and the second substrates is applied polyamic acid by the use of an offset press, and the substrates are heated at a temperature of 300 degrees Centigrade for 3 hours to form polyimide thin films thereon.

Then the polyimide thin films formed on the both substrates are rubbed by the use of cotton cloth. The rubbing treatment is done to cross the rubbing directions of the first and the second substrates at an angle of 240°.

On one substrate are scattered ball-like fine particles made of $SiO_2$ having the diameter of 7.5$\mu$m and on the other substrate is screen-printed a sealing material consisting mainly of epoxy resin, and then the substrates are stuck together.

After that, liquid crystals are injected by means of well-known vacuum injection method to produce a liquid crystal panel. But the center of the panel swells by the injection, so that pressing is again carried out. Namely, in order to take the excessive liquid crystals out from the interior of the panel, pressure is added toward the inside. Then an injection port of the liquid crystals is sealed with ultraviolet ray curing agent, and the liquid crystal panel is completed.

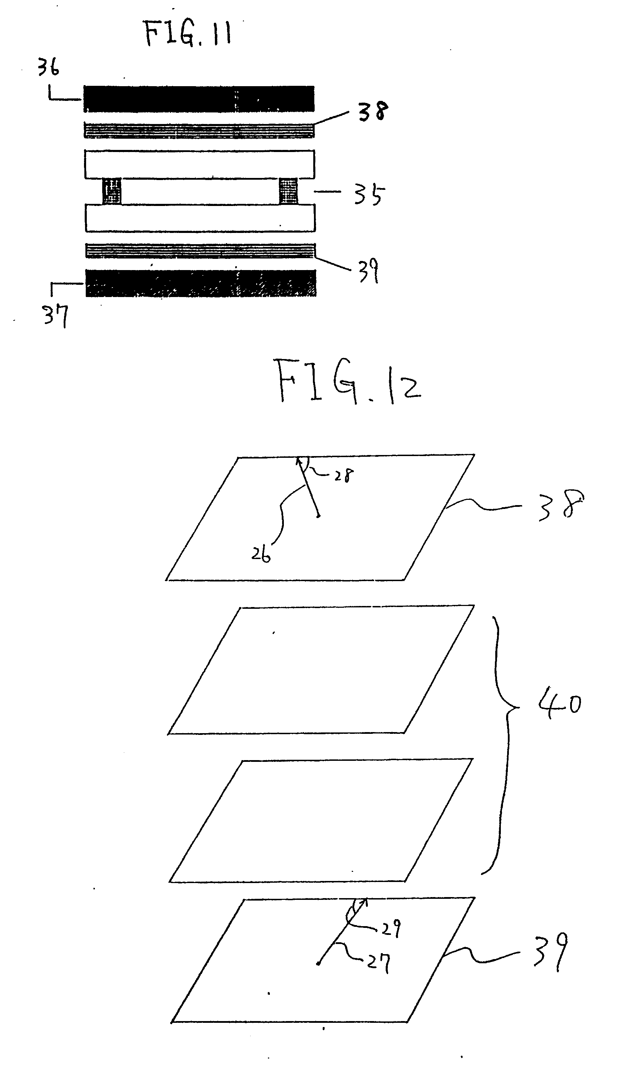

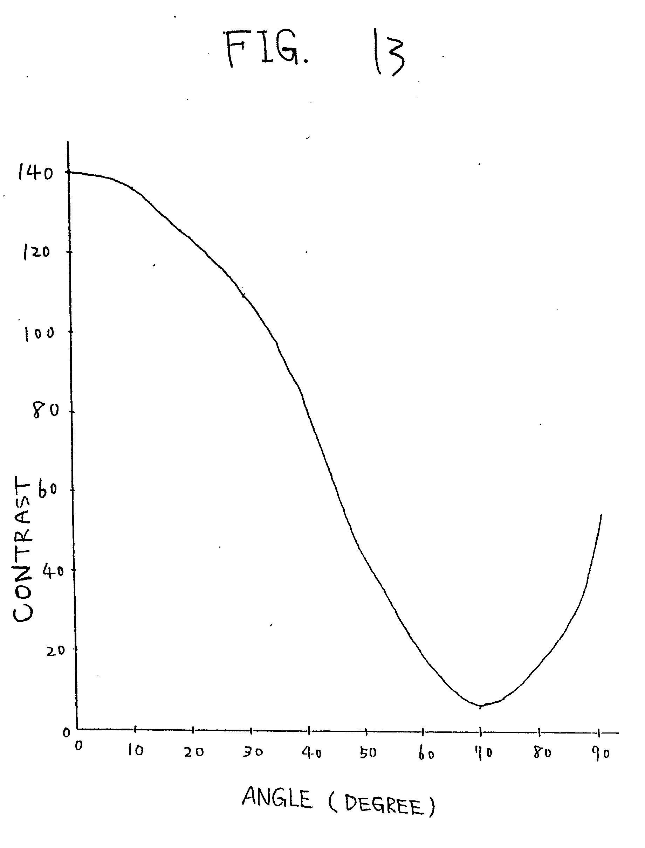

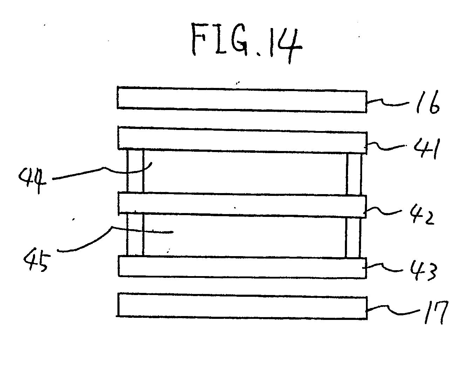

Then, a pair of films 38 and 39 having anisotropy of refractive index are placed to sandwich the liquid crystal panel 35 as shown in Fig. 11, and further a pair of polarizing plates 36 and 37 are placed to sandwich the panel with the films. Thereby a liquid crystal electro-optical device is completed. The drawn directions of the films are shown in Fig. 12. In Fig. 12, 40 designates the pair of substrates in the liquid crystal panel and 38 designates the first film, 39 the second film, and 26 shows a direction in which a first film is drawn, and retardation $dn_o-dn_e$ of the first film is 350nm in this embodiment. The first film is disposed on one side of the panel. 27 shows a direction in which a second film is drawn and retardation $dn_o-dn_e$ of the second film is 350nm in this embodiment. The second film is disposed on the other side of the panel. The first and the second films have anisotropy of refractive index. 28 shows an angle at which the direction 26 of the first film and one side of the panel are crossed and the angle is $72°$. 29 shows an angle at which the direction 27 and said one side of the panel are crossed and the angle is $72°$. The films drawn in such directions as described above are used as the films 30 and 31 of the embodiment. As an experiment, the two films are provided on both sides of the liquid crystal panel in order that absolute values of the angle 28 minus the angle 29 are $0°$, $10°$, $20°$, $30°$, $40°$, $50°$, $60°$, $70°$, $80°$, and $90°$. In Fig. 13 is shown a result of contrast of the liquid crystal electro-optical device in each of the preceding conditions.

(Embodiment No. 6)

In this embodiment, a liquid crystal electro-optical device comprising two liquid crystal layers 44 and 45 between three substrates 41, 42, and 43 is described as shown in Fig. 14.

On a first substrate made from soda glass is formed an ITO thin film as transparent electrodes by means of DC sputtering method, and subsequently said ITO thin film is patterned into segment electrodes by means of well-known photolithography method.

On one surface of a second substrate made from soda glass are formed common electrodes made from an ITO thin film by means of the same methods as the preceding methods.

On the first substrate and a third substrate and on the both surfaces of the second substrate is applied polyamic acid by the use of an offset press, and then the substrates are heated at a temperature of 300 degrees Centigrade for 3 hours to form polyimide thin films thereon.

The polyimide thin films formed on the first and the third substrates and on the both surfaces of the second substrate are rubbed by the use of cotton cloth. The rubbing treatment is done to cross the rubbing directions of the first substrate 41 and one surface of the second substrate 42 facing the first substrate at an angle of $240°$, to cross the rubbing directions of the other surface of the second substrate 42 and the third substrate at an angle of $-240°$, and further to cross the rubbing directions of the both surfaces of the second substrate at an angle of $80°$.

On the both surfaces of the second substrate are scattered ball-like fine particles made of $SiO_2$ having the diameter of $7.5\mu m$ (which are called spacers) and on the first and the third substrates is screen-printed a sealing material consisting mainly of epoxy resin. Then the first, second, and third substrates are stuck together as shown in Fig. 14. At this moment, the first and the second substrates are stuck together so that the electrodes on the first substrate face the electrodes on the second substrate.

After that, liquid crystals are injected between the first and the second substrates and between the second and the third substrates by means of well-known vacuum injection method. But the center of the panel swells by the injection, so that pressing is again carried out. Namely, in order to take the excessive liquid crystals out from the interior of the panel, pressure is added toward the inside. Then injection ports of the liquid crystals are sealed with ultraviolet ray curing agent and the liquid crystal panel illustrated in Fig. 14 is completed.

The liquid crystal electro-optical device of this embodiment further comprises polarizing plates 16 and 17 and a light source 20. In the liquid crystal electro-optical device of this embodiment, directions of absorption axes of the polarizing plates 16 and 17 and orientation directions on the substrates 41, 42, and 43 are the directions of arrows illustrated in Fig.2 respectively. In this case, 14 and 15 show the both surfaces of the second substrate 42, so that 11, 12, and a combination of 14 and 15 show the three substrates.

The lightness of the liquid crystal display produced in this embodiment has been improved compared with that of the conventional liquid crystal display. Practically, a research was carried out concerning a comparison between the conventional two-panel liquid crystal electro-optical device of STN type and the liquid crystal electro-optical device of this embodiment. As a result of the research, 99 in 100 persons answered that the device of this embodiment was easier to see than the conventional one. The liquid crystal electro-optical device of this embodiment comprises just three substrates, so that it costs less and is lighter in weight and further has a better transparency of light, compared with the liquid crystal electro-optical device described in Embodiment No. 1.

Since other modification and changes (varied to fit particular operating requirements and environments) will be apparent to those skilled in the art, the invention is not considered limited to the examples chosen for purposes of disclosure, and covers all changes and modifications which do not constitute departures from the true spirit and scope of this invention.

**Claims**

1. A liquid crystal electro-optical device comprising (a) a first panel and (b) a second panel,

(a) said first panel comprising:

a first pair of substrates;

nematic liquid crystals having positive dielectric anisotropy including optically active substances therein which are disposed between said first pair of substrates, said nematic liquid crystals being arranged in a helical structure so that the uppermost and lowermost nematic liquid crystals are oriented in different directions by an angle in the range of 180° to 270° ; and

a pair of orientation surfaces on said first pair of substrates, said orientation surfaces carrying said uppermost and lowermost nematic liquid crystals to orient said uppermost and lowermost nematic liquid crystals in fixed directions;

(b) said second panel comprising:

a second pair of substrates;

nematic liquid crystals having positive dielectric anisotropy including optically active substances therein which are disposed between said second pair of substrates, said nematic liquid crystals disposed between said second pair of substrates being arranged in a helical structure so that the uppermost and lowermost nematic liquid crystals between said second pair of substrates are oriented in different directions by an angle in the range of -180° to -270° ; and

a pair of orientation surfaces on said second pair of substrates, said orientation surfaces on said second pair of substrates carrying said uppermost and lowermost nematic liquid crystals between said second pair of substrates to orient said uppermost and lowermost nematic liquid crystals in fixed directions,

wherein said first pair of substrates and said second pair of substrates are arranged in parallel so that the fixed directions of the two orientation surfaces located in the center of said liquid crystal electro-optical device are different from each other by an angle in the range of 80° to 85° and 95° to 100° .

2. The liquid crystal electro-optical device of claim 1 wherein electrode arrangements are provided on said first pair of substrates.

3. The liquid crystal electro-optical device of claim 1 wherein said orientation surfaces are surfaces of polyimide films rubbed in said fixed directions respectively.

4. A liquid crystal electro-optical device comprising: first, second, and third substrates arranged in this order;

nematic liquid crystals having positive dielectric anisotropy including optically active substances therein which are disposed between said first substrate and said second substrate, said nematic liquid crystals being arranged in a helical structure so that the uppermost and lowermost nematic liquid crystals are oriented in different directions by an angle in the range of 180° to 270° ;

nematic liquid crystals having positive dielectric anisotropy including optically active substances therein which are disposed between said second substrate and said third substrate, said nematic liquid crystals between said second substrate and said third substrate being arranged in a helical structure so that the uppermost and lowermost nematic liquid crystals between said second substrate and said third substrate are oriented in different directions by an angle in the range of -180° to -270° ;

a pair of orientation surfaces on said first substrate and a surface of said second substrate facing said first substrate, said orientation surfaces carrying the uppermost and lowermost nematic liquid crystals provided therebetween to orient the uppermost and lowermost nematic liquid crystals provided therebetween in fixed directions; and

a pair of orientation surfaces on said third substrate and a surface of said second substrate facing said third substrate, said orientation surfaces carrying the uppermost and lowermost nematic liquid crystals provided therebetween to orient the uppermost and lowermost nematic liquid crystals provided therebetween in fixed directions,

wherein the fixed directions of the two orientation surfaces of said second substrate are different from each other by an angle in the range of 80° to 85° and 95° to 100° .

5. The liquid crystal electro-optical device of claim 4 wherein electrode arrangements are provided on said first substrate and the surface of said second substrate facing said first substrate.

6. The liquid crystal electro-optical device of claim 4 wherein said orientation surfaces are surfaces of polyimide films rubbed in said fixed directions respectively.

7. A liquid crystal electro-optical device comprising: a pair of substrates;

nematic liquid crystals having positive dielectric anisotropy including optically active substances therein which are disposed between said substrates, said nematic liquid crystals being arranged in a helical structure so that the uppermost and lowermost nematic liquid crystals are oriented in different directions by an angle in the range of 180° to 270°;

a first film drawn in a direction to function as a filter having an anisotropy of refractive index; and

a second film drawn in a direction to function as a filter having an anisotropy of refractive index, wherein said substrates and said first film and said second film are arranged in parallel so that the directions in which said first film and said second film are drawn are different from each other by an angle in the range of 0° to 40°.

8. The liquid crystal electro-optical device of claim 7 wherein said first film and said second film are comprised of macromolecules.

9. The liquid crystal electro-optical device of claim 7 wherein electrode arrangements are provided on said substrates.

FIG. 1

FIG.2

FIG.3

## FIG. 4

## FIG. 6

FIG.5

FIG. 7

FIG.8

FIG.9

# FIG. 10

CONTRAST

ANGLE (DEGREE)

FIG. 11

FIG. 12

# FIG. 13

# FIG.14

16
41
44
42
45
43
17